# EUROPÄISCHE PATENTSCHRIFT

(11) **EP 1 827 755 B1**
(45) Veröffentlichungstag und Bekanntmachung des Hinweises auf die Patenterteilung: **01.10.2008**
(21) Anmeldenummer: 05817845.0
(22) Anmeldetag: 05.12.2005
(51) Int. Cl.: B24B 7/00, B24B 7/22, B24B 7/24, B24B 27/00, B24B 27/033, B24B 41/02, B25H 1/00, B23Q 1/48, B23Q 1/25, B23Q 9/00

(54) **VORRICHTUNG ZUM SCHLEIFEN VON HARTEN OBERFLÄCHEN, INSBESONDERE VON GLASFLÄCHEN**
DEVICE FOR POLISHING HARD SURFACES, ESPECIALLY GLASS SURFACES
DISPOSITIF SERVANT A POLIR DES SURFACES DURES, EN PARTICULIER DES SURFACES DE VERRE

(30) Priorität: 06.12.2004 CH 201304
(43) Veröffentlichungstag der Anmeldung: 05.09.2007
(73) Patentinhaber: Vetrox AG, 8808 Pfäffikon/SZ (CH)
(72) Erfinder: DÜR, Bernhard, CH-8854 Galgenen (CH); STEINMANN, Beat, 8810 Horgen (CH)
(74) Vertreter: Luchs, Willi
(86) Internationale Anmeldenummer: PCT/EP2005/013011
(87) Internationale Veröffentlichungsnummer: WO 2006/061172

(56) Entgegenhaltungen:
- EP-A- 1 252 996
- DE-C1- 10 053 410
- DE-U1- 9 203 296

## Beschreibung

Die Erfindung betrifft eine Vorrichtung zum Schleifen von harten Oberflächen, insbesondere von Glasflächen, gemäss dem Oberbegriff des Anspruches 1.

Beschädigte Oberflächen, beispielsweise bekratzte Glasoberflächen oder Oberflächen mit Ätzungen, Kalkflächen, Zementflächen etc. können bekanntlich mit einer Schleifeinrichtung repariert werden. Die Reparatur erfolgt in mehreren Stufen (Schleifen, Feinschleifen, Polieren, Hochpolieren), wozu auswechselbare Schleifscheiben eingesetzt werden. Die Schleifeinrichtung wird von Hand geführt, was insbesondere bei grossen Flächen mühsam ist.

In der Druckschrift EP-A-1 252 996, auf der der Oberbegriff des Anspruchs 1 basiert, ist eine Halte- und Positioniervorrichtung für die Bearbeitung harter Stoffe geoffenbart, bei der eine an einer Oberfläche befestigbare Halteeinheit und eine mit dieser verbundenen Positioniereinheit vorgesehen ist, an welcher zum Beispiel ein Werkzeug anbringbar und dieses Werkzeug an ihr variabel positionierbar ist.

Mittels einer Schleifanlage gemäss der Druckschrift DE-A-100 53 410 werden beschichtete Platten geschliffen. Zu diesem Zweck ist eine Schleifscheibe einerseits auf einer Führungsschiene in einer X-Richtung und andererseits an zwei seitlich zu den Platten angeordneten Führungsschienen in einer Y-Richtung verstellbar gehalten. Zudem kann die Schleifscheibe in Z-Richtung bewegt werden. Eine solche Schleifanlage eignet sich nur zum Abschleifen von Platten, welche unabhängig von ihr transportierbar sind.

Der vorliegenden Erfindung liegt die Aufgabe zugrunde, eine Vorrichtung der eingangs genannten Art zu schaffen, die die Reparaturen von beschädigten Oberflächen vereinfacht und höchst präzise Bearbeitung auch bei grossflächigem Einsatz, in eingebautem Zustand beidseitig, als Einzeloder Verbundglas in annähernd jedem An- und Verwendungsfall ermöglicht.

Diese Aufgabe wird erfindungsgemäss durch eine Vorrichtung mit den Merkmalen des Anspruches 1 gelöst.

Weitere bevorzugte Ausgestaltungen der erfindungsgemässen Vorrichtung bilden den Gegenstand der abhängigen Ansprüche.

Die erfindungsgemässe Vorrichtung ermöglicht eine einfache und präzise Reparatur von harten Oberflächen wie Keramik-, Marmor-, Granit und insbesondere von Glasflächen in praktisch allen Herstellungs- und Veredlungsqualitäten, Plexiglas und Kunstoffglas, wobei die Präzision auch bei grossen Oberflächen (Fenster, Fassaden, Schaufenster, Verkleidungen, Wänden, Decken, Dächer, Wintergärten etc.) gewährleistet ist. Von besonderem Vorteil ist die Mobilität der Vorrichtung vor Ort. Sie eignet sich aber auch sehr vorteilhaft für den stationären Einsatz.

Die Erfindung wird nachfolgend anhand der Zeichnung näher erläutert. Es zeigen:
- Fig. 1: ein Ausführungsbeispiel einer erfindungsgemässen Vorrichtung zum Schleifen von harten Oberflächen, insbesondere von Glasflächen, in Draufsicht;
- Fig. 2: einen Schnitt nach Linie II-II in Fig. 1;
- Fig. 3: einen Teil der Vorrichtung in Pfeilrichtung B nach Fig. 1,
- Fig. 4: schematisch eine Seitenansicht eines Schleifbandes anstelle der Schleifscheibe nach Fig. 2;
- Fig.5: eine schematische Vorderansicht des Schleifbandes nach Fig. 4;
- Fig. 6: einen Längsschnitt einer Variante einer erfindungsgemässen Vorrichtung;
- Fig. 7: eine Draufsicht der Vorrichtung nach Fig. 6, bei der aber der Motor weggelassen ist;
- Fig. 8: die Vorrichtung nach Fig. 6 in einer Seitenansicht;
- Fig. 9: einen Schnitt durch die Wippeinrichtung der Vorrichtung; und
- Fig. 10: ein Exzenter und ein mit diesem zusammenwirkendes Rad der Vorrichtung.

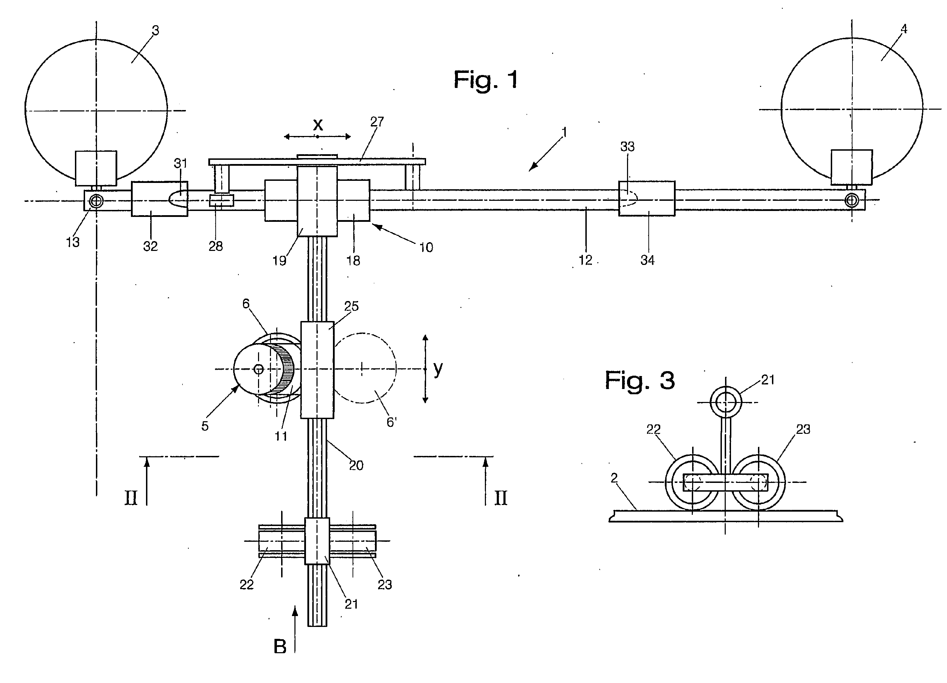

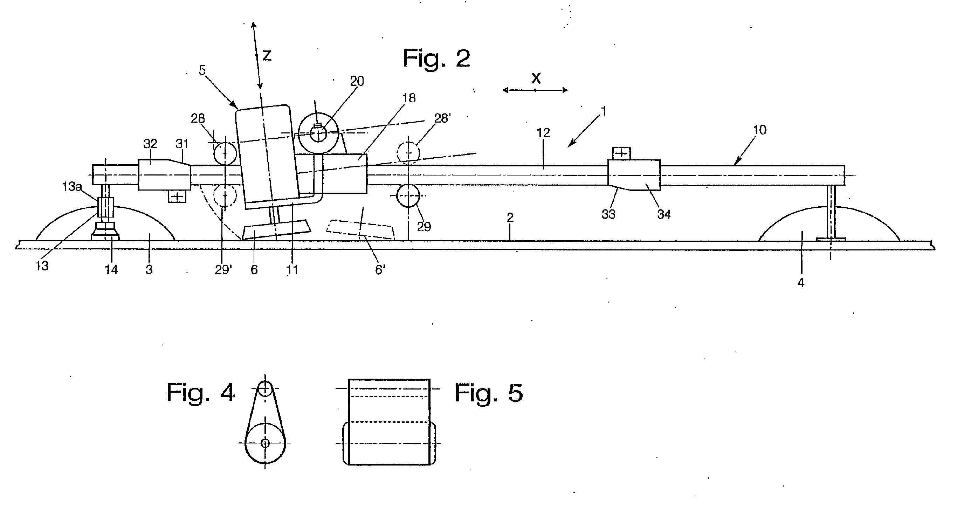

In Fig.1 und 2 ist eine Vorrichtung 1 zum Schleifen von harten Oberflächen, insbesondere von Glasflächen, gezeigt. Zu bearbeiten ist die Oberfläche 2 (Fig. 2) beispielsweise einer Schaufensterscheibe, einer Fensterscheibe eines Hauses, einer Glastür oder einer Trennwand oder ähnlichem. Die Vorrichtung 1 kann auf einem Arbeitstisch oder aber auch - wie in der Zeichnung dargestellt - direkt auf der zu bearbeitenden Fläche 2 positioniert werden. Mit Hilfe von Saugknöpfen 3, 4 kann die Vorrichtung 1 sowohl auf horizontalen als auch an anders gerichteten Flächen 2, beispielsweise an vertikal verlaufenden Fensterscheiben direkt oder in unmittelbarer Umgebung, angebracht werden.

Die Vorrichtung 1 umfasst eine mit einem Antriebsmotor 5' drehverbundene Schleifeinrichtung 5 mit auswechselbaren Schleifscheiben 6, die erfindungsgemäss nicht von Hand sondern mit Hilfe einer Verstelleinrichtung 10 zweidimensional bewegbar ist, wobei die Verstelleinrichtung 10 eine Halterung 11 für die Schleifeinrichtung 5 sowie nachfolgend beschriebene Führungselemente für die Verstellung der Halterung 11 in XY-Richtungen aufweist.

Die Führungselemente für die Verstellung der Halterung 11 umfassen eine Führungswelle 12, die über eine an mindestens einem Ende vorgesehene Nivellierschraube 13 in eine zu der zu bearbeitenden Fläche 2 exakt parallele Stellung gebracht werden kann. Der Nivellierschraube 13 ist wiederum ein Saugknopf 14 zugeordnet. Der Mutterteil 13a ist mit dem Saugknopf 3 oder einem anderen Mittel zur Positionshalterung zur Befestigung der Vorrichtung 1 verbunden. Das andere Ende der Führungswelle 12 ist vereinfacht dargestellt, könnte jedoch ebenfalls über die gleichen Teile 13, 13a, 14 auf der zu bearbeitenden Fläche 2 abgestützt werden.

Alternative Halterungen, die anstelle eines Schrauben-Nivelliermechanismus einen verstellbaren Schwenk- oder Spindelmechanismus beinhalten, sind ebenfalls denkbar.

Auf der Führungswelle 12 ist eine Führungshülse 18 längsverschiebbar angeordnet (Richtung X), auf welcher eine Halterung 19 für eine rechtwinklig zur Führungswelle 12 gerichtete Führungsstange 20 angebracht . Auf der Führungsstange 20 ist ein aus Fig. 1 und 3 ersichtlicher Rollenhalter 21 in Längsrichtung Y der Führungsstange 20 verstellbar angeordnet, der mit zwei Rollen 22, 23 zur Abstützung der Führungsstange 20 auf der zu bearbeitenden Fläche 2 versehen ist. Die Achsen der Rollen 22, 23 sind parallel zur Längsrichtung Y der Führungsstange 20 gerichtet. Es wäre auch eine Abstützung über eine einzige Rolle oder ein ähnlicher paralleler Mechanismus durchaus denkbar. Die dargestellte Variante ist jedoch bezüglich einer stabilen und schonenden Abstützung besonders vorteilhaft. Die Einstellung der Rollenhalterposition auf der Führungsstange richtet sich nach der Grösse der zu bearbeitenden Fläche und wird in einer nicht näher dargestellten Weise (z.B. mittels Stellringe oder Positioniergriff) fixiert.

Im Bereich zwischen dem Rollenhalter 21 und der Halterung 19 ist auf der Führungsstange 20 ein Führungselement 25 in Längsrichtung Y der Führungsstange 20 verschiebbar angeordnet, welches mit der bereits erwähnten Halterung 11 für die Schleifeinrichtung 5 verbunden ist. Das Führungselement 25 ist in einer bestimmten Y-Position wiederum mittels mindestens eines nicht näher dargestellten Stellringes bzw. eines Stellmechanismus bspw. mit einem Stellmotor und Spindel fixierbar, wobei dann die Schleifeinrichtung 5 durch die Bewegung der ganzen Führungsstange 20 samt der auf der Führungswelle 12 geführten Führungshülse 18 von Hand, denkbar wäre auch maschinell angetrieben, in Richtung X bewegt wird. Auf der Führungsstange 20, die in der mit der Führungshülse 18 verbundenen Halterung 19 verschwenkbar gehalten ist, ist eine Wippe 27 (Fig. 1) drehfest angeordnet, die zwei in X-Richtung zu beiden Seiten der Führungsstange 20 angeordnete Rollen 28, 29 trägt, von denen eine auf einer oberen und die andere auf einer unteren Seite der Führungswelle 12 abgestützt ist (vgl. insbesondere Fig. 2), so dass die Führungsstange 20 und mit dieser auch die Halterung 11 in einer bestimmten, aus Fig. 2 ersichtlichen Drehstellung gehalten und in X-Richtung geführt werden, in der die Schleifscheibe 6 im Eingriff mit der Fläche 2 steht. Dabei wird die Schleifscheibe 6 unter einem (möglichst kleinen) Anstellwinkel zur Oberfläche 2 gehalten, wie in der Zeichnung etwas übertrieben dargestellt.

Die Grössen (Durchmesser) der Schleifscheiben 6 sind variabel und werden bestimmt durch die Grösse und Eigenschaften der zu bearbeitenden Oberfläche.

Zur Begrenzung der X-Bewegung bzw. der Schleiflänge in Richtung X sind auf der Führungswelle 12 zwei Stopphülsen 32, 34 angeordnet und in einer bestimmten Stellung fixiert, die jeweils mit einer schrägen Anlauffläche 31 bzw. 33 für die entsprechende Wippen-Rolle 28 bzw. 29 versehen sind. Im Prinzip könnten diese Anlaufflächen auch auswechselbare Kurvenform aufweisen, die nach optischen Lichtbrechungsgesetzen ermittelt wurden, um einen gesteuerten Verlauf des Wegschwenkens der Schleifeinrichtung herbeizuführen.

Wird die Halterung 11 mit der Schleifeinrichtung 5 nach links gemäss Fig. 1 und 2 bewegt, so läuft am Ende dieser Bewegung die obere Rolle 28 auf die obere Anlauffläche 31 der Stopphülse 32 auf, wodurch die Führungsstange 20 mit der Halterung 11 in der Halterung 19 verschwenkt und die Schleifeinrichtung 5 von der Oberfläche 2 entsprechend angesteuert angehoben wird. Das Gleiche geschieht, wenn bei Bewegung der Halterung 11 mit der Schleifeinrichtung 5 nach rechts gemäss Fig. 1 und 2 die untere Rolle 29 auf die untere Anlauffläche 33 der Stopphülse 34 aufläuft.

Zwischen den einzelnen Bewegungen in X-Richtung erfolgt eine stufenweise Verstellung der Halterung 11 in Y-Richtung.

Die Bewegungen der Schleifeinrichtung in X und Y- Richtung können abwechslungsweise und alternativ durchgeführt werden. Damit kann ein oberflächen-optimiertes Schleifbild erreicht werden.

Die Reparatur einer beschädigten Oberfläche, beispielsweise einer bekratzten Glasfläche, erfolgt in der Regel in mehreren Stufen (z.B. Wegschleifen von Kratzern, Feinschleifen, Polieren, Hochpolieren) wozu verschieden Schleifscheiben eingesetzt werden. Zum Auswechseln der Schleifscheiben 6 kann die mit der Führungshülse 18 verbundene Führungsstange 20 um die Längsachse der Führungswelle 12 verschwenkt und die Schleifeinrichtung 5 von der Oberfläche 2 weg angehoben werden.

Die zweidimensionale XY-Bewegung der Schleifeinrichtung-Halterung 11 entlang der Führungselemente 12, 18 bzw. 20, 25 der Verstelleinrichtung 10 kann manuell bewerkstelligt oder aber auch z.B. mit Hilfe von Vorschubmotoren (in der Zeichnung nicht dargestellt) gesteuert durchgeführt werden.

Die erfindungsgemässe Vorrichtung 1 ermöglicht eine einfache und präzise Reparatur von harten Oberflächen wie Keramik-, Marmor-, Granit und insbesondere von Glasflächen, wobei die Präzision auch bei grossen Oberflächen (Fenster, Fassaden, Schaufenster etc.) gewährleistet ist (die Führungswelle 12 kann ca. 3 m lang und vorzugsweise teleskopisch ausgebildet sein). Von besonderem Vorteil ist die Mobilität der Vorrichtung vor Ort. Die Vorrichtung 1 kann rasch an der zu bearbeitenden Oberfläche angebracht werden (über Saugknöpfe 3, 4, die sich in vorteilhafter Weise ausserhalb des zu bearbeitenden Bereiches befinden), und die gewünschte Grösse der XY-Bewegungen kann durch Einstellen der Führungswelle 12 bzw. der Stopphülsen 32, 33 und durch Positionieren des Rollenträgers 21 auf der Führungsstange 20 bestimmt werden. Die Führungsstange 20 kann ebenfalls teleskopisch ausgebildet sein.

In Fig. 1 und Fig. 2 sind ferner noch eine Position 6' der Schleifscheibe strichpunktiert dargestellt. Damit kann die Schleifscheibe auch auf der gegenüberliegenden Seite zu der Führungsstange 20 angeordnet sein, was je nach dem, wie die Kratzer im Abstand zum Fensterrahmen liegen, notwendig sein kann. Damit müssten dann aber auch die Rollen in die jeweilige Position 28', 29' gebracht und die Halterung 11, was nicht näher dargestellt ist, entsprechend ausgerichtet werden.

Anstelle von Schleifeinrichtungen mit Schleifscheiben könnten grundsätzlich auch solche mit Schleifwalzen mit endlosen Schleifbäridern 40 verwendet werden, wie dies in Fig. 4 und Fig. 5 schematisch gezeigt ist. Dieses um Walzen 41, 42 gespannte Schleifband 40 würde dann mit der Vorrichtung gemäss Fig. 1 und Fig. 2 in analoger Weise wie die Schleifscheibe entlang der zu bearbeitenden Fläche bewegt und endseitig entsprechend abgehoben.

Die gesamte Schleifeinrichtung kann im Rahmen der Erfindung zusammen dem diese haltenden Führungselement 20 auch auf der gegenüberliegenden Seite der Führungswelle 10 angeordnet sein. Die Vorrichtung kann ausserdem in einer beliebigen Lage um 360° eingesetzt werden.

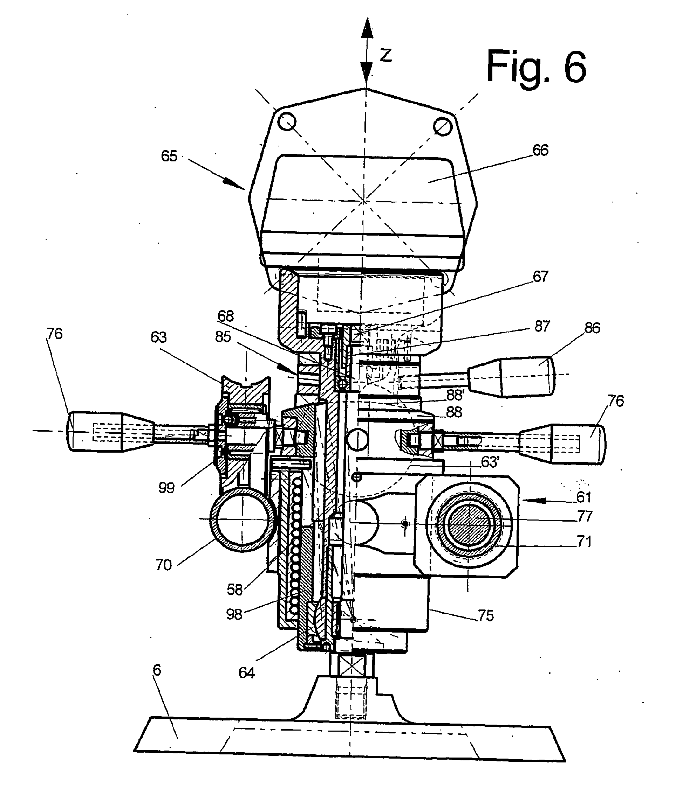

Fig. 6 bis Fig. 8 zeigen eine andere Variante einer Vorrichtung mit einer an einer Verstelleinrichtung geführten Schleifeinrichtung 65, wobei auf letztere ein Motor 66 aufsetzbar ist, welcher eine Motorenwelle mit einem Vierkant 67 aufweist, welches mit einer mit der Schleifscheibe 6 am andern Ende gekoppelten Antriebswelle 68 drehverbindbar ist.

Die Schleifeinrichtung 65 ist wiederum in X- und Y-Richtung bewegbar, dazu eine Führungswelle 62 für die X-Richtung und im Unterschied zu der Variante nach Fig.1 zwei parallel zueinander verlaufende Führungsstangen 70, 71 für die Y-Richtung vorgesehen sind. Zwischen diesen zwei Führungsstangen 70, 71 ist die Schleifeinrichtung 65 hindurchragend angeordnet und einerseits über eine Halterung 61 an der Führungsstange 71 längsverschiebbar gelagert und über ein Laufrad 63 auf der Führungsstange 70 andererseits geführt.

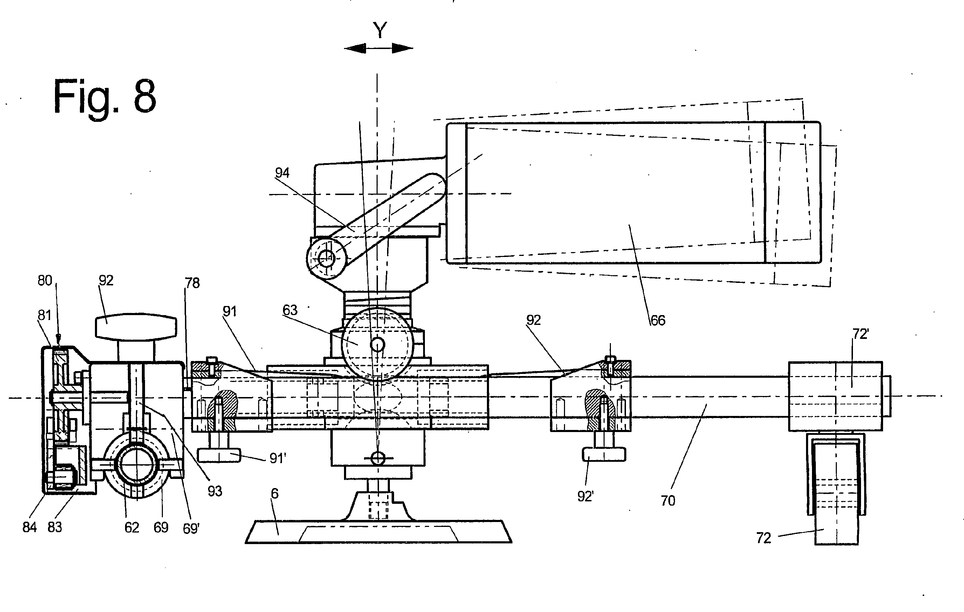

Die Führungsstangen 70, 71 sind gemäss Fig. 8 mit einem Ende an einem Support 69' gehalten. In einer Führungshülse 69 im Support 69' ist Führungswelle 62 gelagert, die im rechten Winkel zu diesen Führungsstangen angeordnet ist. Am anderen Ende sind diese Führungsstangen 70, 71 über mindestens eine Rolle 72 mit einer Rollenhalterung 72' auf der zu bearbeitenden Fläche abstützbar. Alternativ zu dieser Rollenhalterung 72' kann an diesem Ende ebenfalls eine ähnliche Lagerung über einen Support analog wie der Support 69' angebracht werden.

Die Schleifscheibe 6 ist zusammen mit der in einer durchgehenden Hülse 58 gelagerten Antriebswelle 68 und dem auf dieser montierten Motor 66 durch ein oberhalb der Schleifscheibe 6 angeordnetes Gelenklager 64 schwenkbar in einem Zylindergehäuse 75 mit der Halterung 61 gelagert, damit sie je nach Vorschubrichtung um einige Winkelgrade zur senkrechten Stellung neigbar ist, und zwar derart, dass sie vorzugsweise in X- oder Y-Richtung verschwenkbar ist, so dass die Vorschubrichtung in beiden Richtungen erfolgen kann, währenddessen die Vorrichtung nach Fig.1 eine Vorschubrichtung nur in X-Richtung zulässt, da ein Schwenken der Schleifscheibe 6 nur in einer Ebene in diese Richtung vorgesehen ist. Damit wird vorteilhaft eine Bearbeitung der zu schleifenden Flächen sowohl in X- als auch in Y-Richtung ausgeführt, wodurch ein besseres Schleifbild entsteht.

Die Schleifscheibe 6, mit Motor 66 und schwenkbarer Antriebswelle 68 inklusive dem Gelenklager 64 kann in der Halterung 61 in einer Z-Richtung bewegt werden. Zu diesem Zwecke ist in dem Führungsgehäuse 75 eine mit einer Achse 99 des Laufrades 63 gekoppelten Führungshülse 98 längsverstellbar angeordnet. Am unteren Ende der Führungshülse 98 ist innenseitig das Gelenklager 64 befestigt. Damit wird erreicht, dass jede Bewegungsrichtung X, Y und Z der Schleifscheibe, zusätzlich mit der frei wählbaren Taumel-Schwenkbewegung, einzeln und separat eingestellt, gesteuert und gleichzeitig betätigt werden kann.

Für ein Verschwenken der Schleifscheibe 6 in Richtung der Führungsstangen 70, 71 wird die Schleifscheibe 6 zusammen mit ihrer Antriebswelle 68 und ebenso dem Motor 66 in einer parallel zu den Führungsstangen 70, 71 verlaufenden Ebene, d.h. senkrecht zur Bildebene gemäss Fig. 6 geschwenkt. Mittels einer Schraubklemmeinrichtung 85 ist die Antriebswelle 68 wieder fixierbar, indem eine mit einem Griffhebel 86 verbundene Mutterhülse 87 motorseitig gedreht und mit einer eine kugelförmige Oberfläche 88' aufweisenden, im Zylindergehäuse 75 gehaltenen Hülse 88 verschraubt wird.

Das die Schleifeinrichtung 65 stützende Laufrad 63 dient mitunter zum Abheben der Schleifscheibe 6 von der zu bearbeitenden Oberfläche, wie dies in Fig. 6 und Fig. 8 ersichtlich ist. Entsprechende auf der Führungsstange 70 verstellbare Rampen 91, 92 werden an einer gewünschten Position durch einen Befestigungshebel 91' arretiert. Wenn nun die Schleifeinrichtung 65 an ihren Griffen 76 von Hand beispielsweise gegen die Rampe 91 hin bewegt wird, so wird die Schleifeinrichtung 65 und mit ihr die Schleifscheibe 6 beim Auffahren des Laufrades 63 in der Führungshülse 98 in Z-Richtung abgehoben. Dieses Laufrad 63 ist derart am Zylindergehäuse 75 verstellbar angeordnet, dass es wenigstens in eine um 90° versetzte Position, wie dies in Fig. 6 mit dem strichpunktiert dargestellten Laufrad 63' veranschaulicht ist, fixiert werden kann.

Es ist ferner noch gemäss Fig. 6 eine in der Führungsstange 71 integrierte Gewichtsentlastung 77 vorgesehen. Dieses ist mit einem an der Schleifeinrichtung 65 befestigten Kabelzug 78 (Fig. 8) verbunden, wobei dieser Kabelzug 78 bis ans obere Ende der Führungsstange 71 und um ein nicht näher gezeigtes Umlenkrad zurück zur Schleifeinrichtung 65 geführt ist. Diese Gewichtsentlastung 77 ist vorteilhaft als eine Gasdruckfeder mit einem Seilzug ausgebildet. Sie könnte aber auch als Zug- und Druckfeder vorgesehen sein.

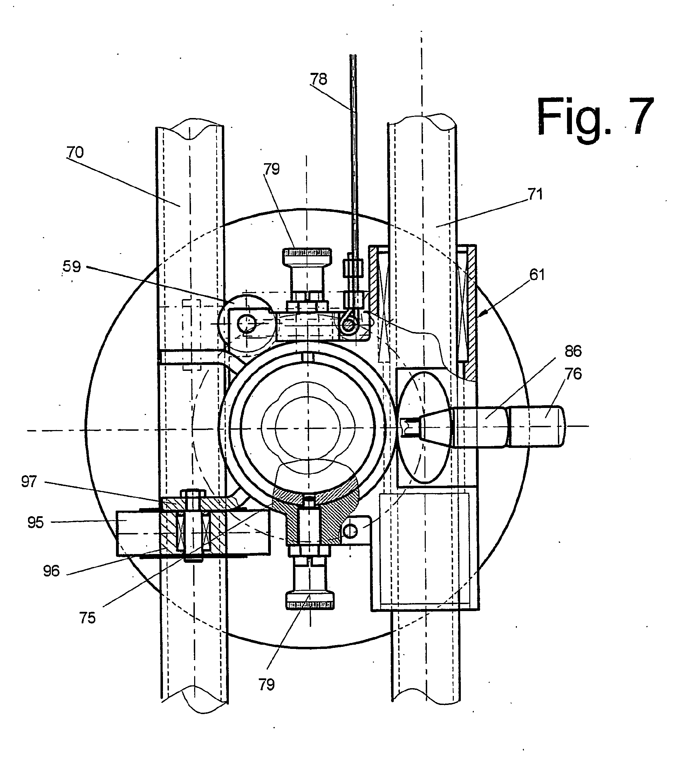

In Fig. 7 sind noch Befestigungsknöpfe 79 beidseitig am Zylindergehäuse 75 dargestellt. Sie sind von der Aussenseite betätigbar und es wird mit ihnen ein lösbares Befestigen der Führungshülse 98 und damit der Antriebswelle 68 in dem Zylindergehäuse 75 ermöglicht, d.h. die Antriebswelle kann zusammen mit dem Motor nach deinstallierter Schleifscheibe weggenommen werden.

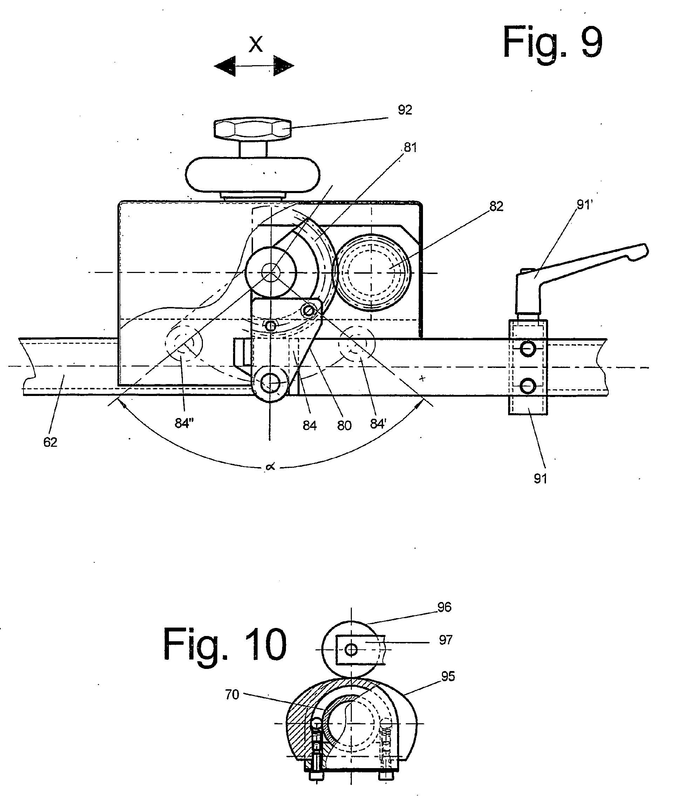

Gemäss Fig. 8 bis Fig. 10 ist auf der Rückseite des Supports 69' eine Wippeinrichtung 80 in einem Kästchen 83 zum Abheben bzw. Absenken der Schleifscheibe 6 auf die zu bearbeitende Fläche vorgesehen, wenn die Vorschubbewegung dieser Schleifscheibe entlang der Führungswelle 62 in X-Richtung erfolgt. Diese Wippeinrichtung 80 weist eine Wippe 84 auf, die um einen bestimmten Winkel α auf die eine bzw. andere Seite kippbar ist. Diese Wippe 84 ist mit einem Zahnsegment 81 drehverbunden, welches seinerseits mit einem koaxial an der Führungsstange 70 befestigten Zahnrad 82 in Eingriff steht. Bei einer Verstellung des Supports 69' bis an einen an der Führungswelle 62 mittels Schraube 91', 92' arretierten Endanschlag 91, 92 wird die Wippe 84 von der einen in die andere abgewinkelte Position 84', 84" geschwenkt und mit ihr das Zahnsegment 81, das Zahnrad 82 und die Führungswelle 70 damit gedreht. Die Führungswelle 70 ihrerseits dreht gemäss Fig. 7 bzw. Fig. 10 einen auf ihr montierten Exzenter 95, welcher einen auf dem Umfang des Exzenters 95 laufendes Rad 96 und mit ihm die Antriebswelle 68 und damit die Schleifscheibe 6 in Z-Richtung verstellt, dadurch, dass dieses Rad 96 an einem am Zylindergehäuse 75 befestigten Arm 97 gelagert ist. In Fig. 7 ist das Laufrad um 90° oder 180° versetzt angeordnet, was aber nicht dargestellt ist. Damit ist dieses Anheben und Absenken der Schleifscheibe 6 beim Hin- und Herschieben der Schleifeinrichtung 65 in X-Richtung gewährleistet. Ferner ist noch ein an der Halterung 61 drehgelagertes Leitrad 59 vorgesehen, welches in eine Längsnut der Führungsstange 70 eingreift.

In der gezeigten Ausgangsstellung der Wippe 84 vertikal nach unten kann in der andern Richtung (Y) gearbeitet werden.

Die Führungswelle 62 ist über Saugknöpfe 3, 4 - analog wie in Fig. 1 dargestellt ist - an der zu bearbeitenden Scheibe befestigbar, wobei diese Saugknöpfe je nach Anwendung beide je aussenseitig an der Führungswelle 62 oder eine aussenseitig und die andere annähernd in der Mitte und die Führungshülse auf der andern Seite dieser Führungswelle gelagert ist, so dass die Führungshülse bis annähernd zum Ende dieser Führungswelle verschiebbar ist. Diese als sogenannte Saugnapfblöcke vorgesehenen universell in allen relativen Lage zur Vorrichtung befestigbaren Saugknöpfe 3, 4 sind so dimensioniert, dass sie eine ausreichende Befestigungskraft der Vorrichtung auch beim Schleifen an einer Fensterscheibe oder dergleichen gewährleisten.

Ein Handrad 92 ist mit einem koaxial im Support 69' angeordneten Bolzen 93 verbunden, mittels welchem dieser Support 69' auf der Führungswelle fixierbar ist, damit bei einem Bearbeiten in Y-Richtung keine Bewegung in X-Richtung erfolgt. Fernerhin ist noch ein Klemmhebel 94 für die Befestigung des Motors 66 angedeutet. Als weiterer Vorteil ergibt sich, dass jeweils ein Motor mit unterschiedlicher Grösse und Leistung befestigbar ist. Die Wahl der Grösse des Motors wird vorgegeben durch die Glasbeschaffenheit, den Abmessungen der zu bearbeitenden Fläche und dem Durchmesser der eingesetzten Schleifscheibe 6.

Der Abstand von der zu bearbeitenden Fläche zu den Führungswelle ist derart variabel einstellbar, dass die Saugnäpfe auf einer anderen Ebene als die Arbeitsebene befestigbar sind, wie beispielsweise bei Schiebetüren, Überbrückung von Schaufensterrahmen, Überbrückung der Karrosserie bei Eisenbahnwagen usw.

Es versteht sich von selbst, dass auch andere Flächen als ebene geschliffen werden könnten, wie beispielsweise bei modernen Eisenbahnzügen oder Trams. Hierbei könnte die Vorrichtung auch stationär an einem Abstellplatz eines solchen Zuges platziert sein und durch eine Schwenkbewegung oder dergleichen an das zu behandelnde Fenster positioniert werden. Durch die schwenkbare Anordnung der Schleifscheibe könnte sich dieselbe während der Vorschubbewegung entsprechend der Form der Scheibe anheben bzw. absenken.

Ferner liesse sich die Vorrichtung durch entsprechende Einrichtungen auch automatisiert oder halbautomatisiert betreiben. Dies würde bedingen, dass für den Vorschub der Schleifscheiben, wie bereits oben erwähnt, zum Beispiel geeignete Drehspindeln und gesteuerte Antriebsmotoren vorgesehen würden.

## Patentansprüche

1. Vorrichtung zum Schleifen von harten Oberflächen, insbesondere von Glasflächen, umfassend eine von einem Motor angetriebene Schleifeinrichtung (5) mit auswechselbaren Schleifscheiben (6), Schleifwalzen mit Schleifbändern oder ähnlichem, welche Schleifeinrichtung (5) mit Hilfe einer Verstelleinrichtung (10) bewegbar ist, wobei die Verstelleinrichtung (10) eine Halterung (11) für die Schleifeinrichtung (5) sowie Führungsstangen bzw. Führungswellen (12, 20) für die Verstellung der Halterung (11) in XYZ-Richtungen aufweist, **dadurch gekennzeichnet, dass**
die Verstelleinrichtung eine parallel zu der zu bearbeitenden Fläche (2) verlaufende Führungswelle (12) sowie eine rechtwinklig zur Führungswelle (12) gerichtete Führungsstange (20) umfassen, welche Führungsstange (20) einerseits mit einem Ende mit einer auf der Führungswelle (12) längsverschiebbar angeordneten Führungshülse (18) verbunden und anderseits über mindestens eine Rolle (22, 23) auf der zu bearbeitenden Fläche (2) abstützbar ist, wobei die Halterung (11) mit einem auf der Führungsstange (20) längsverschiebbar angeordneten Führungselement (25) verbunden ist.

2. Vorrichtung nach Anspruch 1, **dadurch gekennzeichnet, dass** die Führungswelle (12) über Saugknöpfe (3, 4) an der zu bearbeitenden Fläche (2) befestigbar und über mindestens eine Nivellierschraube (13) in die zu der zu bearbeitenden Fläche (2) parallel verlaufende Stellung bringbar ist.

3. Vorrichtung nach Anspruch 1 oder 2, **dadurch gekennzeichnet, dass** die mit der auf der Führungswelle (12) angeordneten Führungshülse (18) verbundene Führungsstange (20) zwecks Auswechseln der Schleifscheiben (6) um die Achse des Führungswelle (12) verschwenkbar ist.

4. Vorrichtung nach einem der Ansprüche 1 bis 3, **dadurch gekennzeichnet, dass** auf der Führungsstange (20) ein Rollenhalter (21) in Längsrichtung (Y) der Führungsstange (20) verstellbar angeordnet ist, der mit zwei Rollen (22, 23) zur Abstützung der Führungsstange (20) auf der zu bearbeitenden Fläche (2) versehen ist, deren Achsen parallel zur Längsrichtung (Y) der Führungsstange (20) gerichtet sind.

5. Vorrichtung nach einem der Ansprüche 1 bis 4, **dadurch gekennzeichnet, dass** die Führungsstange (20) in einer an der Führungshülse (18) befestigten Halterung (19) verschwenkbar gehalten und mit einer Wippe (27) drehfest verbunden ist, welche Wippe (27) zwei zu beiden Seiten der Führungsstange (20) angeordnete Rollen (28, 29) trägt, von denen eine auf einer oberen und die andere auf einer unteren Seite der Führungswelle (12) aufliegt und dabei die Führungsstange (20) und somit auch die Halterung (11) in einer bestimmten Drehstellung hält, in der die Schleifscheibe (6) mit der zu bearbeitenden Fläche (2) im Eingriff steht, wobei auf der Führungswelle (12) zwei Stopphülsen (32, 34) fixierbar sind, die jeweils mit einer schrägen Anlauffläche (31, 33) für die entsprechende Wippen-Rolle (28, 29) versehen sind, über welche die Wippe (27) und somit auch die Führungsstange (20) verschwenkbar und die Schleifscheibe (6) aus dem Eingriff mit der zu bearbeitenden Fläche (2) bringbar ist.

6. Vorrichtung nach einem der Ansprüche 1 bis 5, **dadurch gekennzeichnet, dass** die zweidimensionale, mit Hilfe der Verstelleinrichtung (10) erfolgende Bewegung der die Schleifeinrichtung (5) tragenden Halterung (11) manuell oder mit Hilfe von Vorschubmotoren gesteuert durchführbar ist.

## Claims

1. Device for polishing hard surfaces, especially glass surfaces, consisting of a motor-driven polishing device (5) with replaceable polishing discs (6), polishing drums with polishing belts or similar, which polishing device (5) is movable with the aid of a displacement device (10), whereby the displacement device (10) consisting of a holding element (11) for the polishing device (5) and guide rods or guide shafts (12, 20) to displace the holding element (11) in XYZ- directions, **characterised in that** the displacement device include a guide shaft (12) running parallel to the processing area (2) and a guide rod (20) oriented at right angles to the guide shaft (12), which guide rod (20) being connected, firstly, at one end with a guide bush (18) arranged so as to be longitudinally displaceable on the guide shaft (12) and secondly being supportable via at least one roller (22, 23) on the processing area (2), whereas the holding element (11) is connected with a guide element (25) arranged so as to be longitudinally displaceable on the guide rod (20).

2. Device according to claim 1, **characterised in that** the guide shaft (12) can be fastened onto the processing area (2) using suction cups (3, 4) and can be brought into position in parallel with the processing area (2) by means of at least one jackscrew (13).

3. Device according to claim 1 or 2, **characterised in that** the guide rod (20) connected to the guide bush (18) arranged on the guide shaft (12) pivots about the axis of the guide shaft (12) for the purposes of changing the polishing discs (6).

4. Device according to one of claims 1 to 3, **characterised in that** a roller holder (21) which is displaceable in the longitudinal direction (Y) of the guide rod (20) is arranged on the guide rod (20), which is provided with two rollers (22, 23) to support the guide rod (20) on the processing area (2), the axes of which are aligned parallel to the longitudinal direction (Y) of the guide rod (20).

5. Device according to one of claims 1 to 4, **characterised in that** the guide rod (20) is pivotably held in a holding element (19) fixed to the guide bush (18) and non-rotatably connected to a rocker (27), said rocker (27) carrying two rollers (28, 29) arranged on both sides of the guide rod (20), one of which abuts on an upper and the other on a lower side of the guide shaft (12) and thus holds the guide rod (20) and thus also the holding element (11) in a specified rotary position, in which the polishing disc (6) engages with the processing area (2), which two stop sleeves (32, 34) can be fixed to the guide shaft (12), each sleeve being provided with a slanted stop face (31, 33) for the corresponding rocker-roller (28, 29), via which the rocker (27) and thus also the guide rod (20) are pivotable and the polishing disc (6) can be disengaged from the processing area (2).

6. Device according to one of claims 1 to 5, **characterised in that** the two-dimensional movement with the aid of the displacement device (10) of the holding element (11) carrying the polishing device (5) can be effected manually or controlled using feed motors.

## Revendications

1. Dispositif destiné à meuler des surfaces dures, en particulier des surfaces en verre, comprenant un appareil de meulage (5) entraîné par un moteur équipé de disques de meulage (6) interchangeables, des rouleaux à meuler munis de bandes abrasives ou analogues, cet appareil de meulage (5) étant mobile au moyen d'un dispositif de réglage (10), le dispositif de réglage (10) présentant un support (11) pour l'appareil de meulage (5) ainsi que des tiges de guidage ou des arbres de guidage (12, 20) pour le réglage du support (11) dans les directions XYZ,
**caractérisé en ce que**
le dispositif de réglage comprend un arbre de guidage (12) s'étendant parallèlement à la surface à usiner (2) ainsi qu'une tige de guidage (20) dirigée à angle droit par rapport à l'arbre de guidage (12), cette tige de guidage (20) étant d'une part reliée par une extrémité à une douille de guidage (18) agencée de manière à se déplacer longitudinalement sur l'arbre de guidage (12) et pouvant d'autre part s'appuyer sur la surface à usiner (2) par l'intermédiaire d'au moins un rouleau (22, 23), le support (11) étant relié à un élément de guidage (25) agencé de manière à se déplacer longitudinalement sur la tige de guidage (20).

2. Dispositif selon la revendication 1, **caractérisé en ce que** l'arbre de guidage (12) peut être fixé à la surface à usiner (2) au moyen de boutons d'aspiration (3, 4) et être amené dans la position s'étendant parallèlement à la surface à usiner (2) par l'intermédiaire d'au moins une vis de niveau (13).

3. Dispositif selon la revendication 1 ou 2, **caractérisé en ce que** la tige de guidage (20) reliée à la douille de guidage (18) agencée sur l'arbre de guidage (12) peut pivoter sur l'axe de l'arbre de guidage (12) pour l'échange des disques de meulage (6).

4. Dispositif selon l'une quelconque des revendications 1 à 3, **caractérisé en ce qu'**un porte-rouleau (21) est agencé de manière réglable sur la tige de guidage (20) dans la direction longitudinale (Y) de la tige de guidage (20), lequel est muni de deux rouleaux (22, 23) pour soutenir la tige de guidage (20) sur la surface à usiner (2), dont les axes sont orientés de manière parallèle à la direction longitudinale (Y) de la tige de guidage (20).

5. Dispositif selon l'une quelconque des revendications 1 à 4, **caractérisé en ce que** la tige de guidage (20) est maintenue de manière à pivoter dans un support (19) fixé à la douille de guidage (18) et est reliée, bloquée en rotation, à une bascule (27), cette bascule (27) portant deux rouleaux (28, 29) agencés des deux côtés de la tige de guidage (20), un rouleau reposant sur un côté supérieur et l'autre sur un côté inférieur de l'arbre de guidage (12), et maintenant la tige de guidage (20) ainsi que le support (11) dans une position rotative déterminée, dans laquelle le disque de meulage (6) vient en contact avec la surface à usiner (2), deux douilles d'arrêt (32, 34) pouvant être fixées sur l'arbre de guidage (12), ces dernières étant munies d'une surface de contact (31, 33) inclinée pour le rouleau à bascule (28, 29) correspondant, permettant à la bascule (27) ainsi qu'à la tige de guidage (20) de pivoter et au disque de meulage (6) de pouvoir être mis hors de contact avec la surface à usiner (2).

6. Dispositif selon l'une quelconque des revendications 1 à 5, **caractérisé en ce que** le déplacement bidimensionnel du support (11) portant l'appareil de meulage (5) se produisant au moyen du dispositif de réglage (10) peut être réalisé manuellement ou commandé à l'aide de moteurs d'avance.
